# EUROPEAN PATENT APPLICATION

(11) **EP 4 697 285 A2**
(43) Date of publication of application: **18.02.2026**
(21) Application number: 25188072.0
(22) Date of filing: 08.07.2025
(51) Int. Cl.: G06V 10/774, G06V 10/84, G06V 10/82, G06V 10/70

(54) **INFORMATION PROCESSING PROGRAM, INFORMATION PROCESSING APPARATUS, AND INFORMATION PROCESSING METHOD**

(30) Priority: 13.08.2024 JP 2024135115
(71) Applicant: Fujitsu Limited, Kawasaki-shi, Kanagawa 211-8588 (JP)
(72) Inventor: Hotta, Yuuji, Kawasaki-shi, Kanagawa, 211-8588 (JP)
(74) Representative: Hoffmann Eitle

(57) **Abstract**

An information processing apparatus (100) detects a machine learning model that outputs, based on plural sets of image data resulting from imaging of objects, inference results for the plural sets of image data, the inference results having been in practical use already, collects sets of image data resulting from imaging of objects by means of at least one or more cameras, the objects being related to a target that inference results from the machine learning model detected are to be practically used for, determines whether or not the sets of image data collected satisfy a tuning condition for the machine learning model detected, specifies, based on a result of a determination on whether or not the tuning condition is satisfied, a kind of preprocessing to be executed on the sets of image data collected, and generates sets of image data that have been subjected to the kind of preprocessing specified.

## Description

### FIELD

The embodiments discussed herein are related to information processing programs, information processing apparatuses, and information processing methods.

### BACKGROUND

In a conventionally known technique, tuning a DL model, which is for classifying acquired images without using a hand, without using true information even after the DL model has actually started being in practical use enables the DL model to be adapted to data having a tendency different from that of data used in training of the DL model.

Patent Literature 1: Japanese Laid-open Patent Publication No. 2021-174220

In the above mentioned technique, in order to increase precision of classification processing by the model that has been tuned, desirably, a certain adequate number is prescribed as the number of sets of input data used in the tuning and the model is tuned when the prescribed number of sets of data have become available.

However, in a case where merchandise manufactured irregularly is to be inspected or for small-scale practical use on-site, time is needed for a certain number of sets of processed data to become available, and if classification processing were to be executed by tuning of the model at certain intervals, the number of sets of input data would be small and precision of classification would thus be reduced.

Accordingly, it is an object in one aspect of an embodiment of the present invention to provide an information processing program, an information processing apparatus, and an information processing method that enable image data to be generated, the image data being applicable to a machine learning model in practical use.

### SUMMARY

According to an aspect of an embodiment, an information processing program causes a computer (100) to execute a process. The process includes detecting (121, S101) a machine learning model that outputs, based on plural sets of image data resulting from imaging of objects, inference results for the plural sets of image data, the inference results having been in practical use already, collecting (S102) sets image data resulting from imaging of objects by means of at least one or more cameras, the objects being related to a target that inference results from the machine learning model detected are to be practically used for, determining (S103) whether or not the sets of image data collected satisfy a tuning condition for the machine learning model detected, specifying (S104), based on a result of a determination on whether or not the tuning condition is satisfied, a kind of preprocessing to be executed on the sets of image data collected, and generating (S105) sets of image data that have been subjected to the kind of preprocessing specified.

### BRIEF DESCRIPTION OF DRAWINGS

FIG. 1 is a diagram illustrating a machine learning model according to a first embodiment;
FIG. 2 is a diagram illustrating an example of inference results for sets of image data by the machine learning model according to the first embodiment;
FIG. 3 is a diagram illustrating processing by an information processing apparatus according to the first embodiment;
FIG. 4 is a functional block diagram illustrating a functional configuration of the information processing apparatus according to the first embodiment;
FIG. 5 is a diagram illustrating a specific example of processing performed by an adjustment unit according to the first embodiment;
FIG. 6 is a diagram illustrating processing performed by a machine learning unit according to the first embodiment;
FIG. 7 is a diagram illustrating a specific example of overall processing performed by the information processing apparatus according to the first embodiment;
FIG. 8 is a flowchart illustrating an example of a flow of processing according to the first embodiment;
FIG. 9 is a diagram illustrating deterioration in precision of a machine learning model, the deterioration being due to data drift;
FIG. 10 is a functional block diagram illustrating a functional configuration of an information processing apparatus according to a second embodiment;
FIG. 11 is a diagram illustrating an example of a method of determining a state of deterioration in precision of a machine learning model, according to the second embodiment;
FIG. 12 is a diagram illustrating another example of the method of determining a state of deterioration in precision of a machine learning model, according to the second embodiment;
FIG. 13 is a diagram illustrating processing performed by a switch unit according to the second embodiment;
FIG. 14 is a flowchart illustrating an example of a flow of overall processing according to the second embodiment;
FIG. 15 is a flowchart illustrating an example of a flow of overall processing according to the second embodiment; and
FIG. 16 is a diagram illustrating an example of a hardware configuration.

### DESCRIPTION OF EMBODIMENTS

Preferred embodiments of the present invention will be explained with reference to accompanying drawings. The information processing program, the information processing apparatus, and the information processing method, according to the present application, are not to be limited by these embodiments.

### (a) First Embodiment

### Description of Machine Learning Model

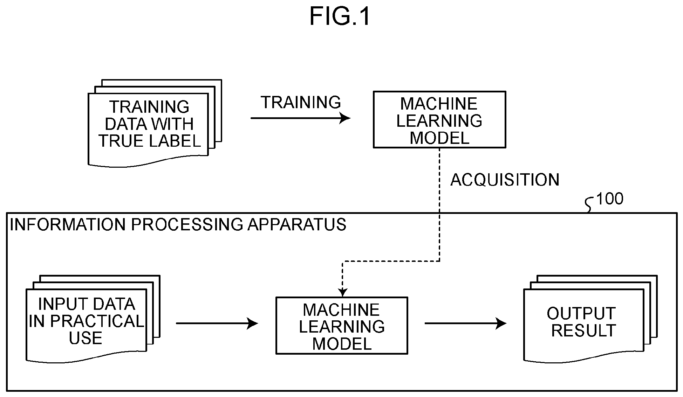

A machine learning model used by an information processing apparatus 100 will be described first. FIG. 1 is a diagram illustrating a machine learning according to a first embodiment. As illustrated in FIG. 1, the machine learning model acquired by the information processing apparatus 100 is generated by machine learning using training data with true labels, in a training phase before the machine learning model is practically used.

For example, the machine learning model is trained so that sets of image data are each able to be classified as an abnormal set of data or a normal set of data, the sets of image data being sets of input data and resulting from imaging of appearances of products, by use of sets of training data including: sets of image data resulting from imaging of appearances of products to be subjected to inference, the sets of image data corresponding to explanatory variables; and true labels indicating whether the sets of image data are abnormal or normal, the true labels corresponding to an objective variable.

In a practical use phase, after being acquired by the information processing apparatus 100, the machine learning model receives input of sets of input data for practical use, executes inference processing, such as multiclass classification or two-class classification of sets of image data, and outputs inference results.

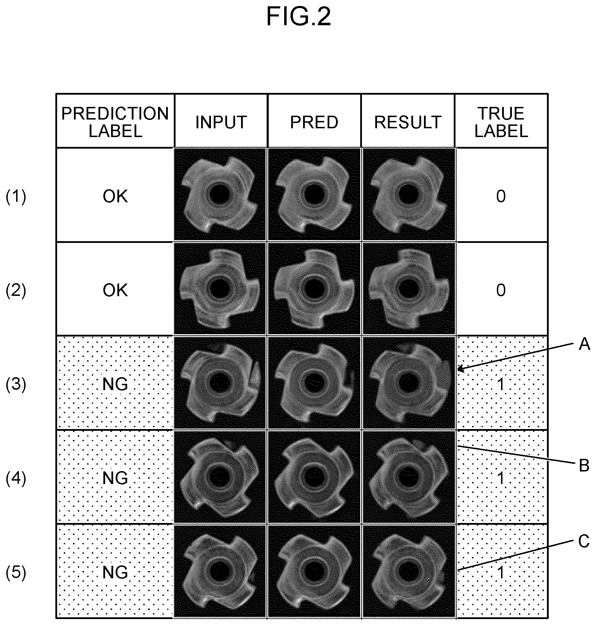

The inference processing by the machine learning model will be described next. FIG. 2 is a diagram illustrating an example of inference results for sets of image data by the machine learning model according to the first embodiment. For example, the machine learning model used by the information processing apparatus 100 is capable of outputting results of classification into sets of image data each having a defect in an appearance of a product and sets of image data each having no defect in an appearance of a product, in response to input of plural sets of image data resulting from imaging of the appearances of these products.

As illustrated in FIG. 2, in inspection of appearances of bolts, for example, in response to input of plural sets of image data resulting from imaging of the appearances of the bolts, the machine learning model determines whether or not the bolts each have any defect, and classifies their images into normal images each having no defect identified therein and abnormal images each having a defect identified therein. In the example illustrated in FIG. 2, on the basis of predictions (pred), sets of image data (1) and (2) with a true label, "0 (true)", are predicted to be sets of data on normal images each having a prediction label, "OK". However, sets of image data (3) to (5) with a true label, "1 (abnormal)", are predicted to be sets of data on abnormal images each having a prediction label, "NG". For example, a burr at a portion A in the set of image data (3) is determined to be abnormal, a portion B in the set of image data (4) is determined to be abnormal, and a portion C in the set of image data (5) is determined to be abnormal.

### Description of Reference Techniques

A reference technique using the machine learning model mentioned above will be described next. After the machine learning model described above starts being practically used, precision of the machine learning model may deteriorate as time elapses. Data drift may be considered as a cause of this deterioration. Data drift is input of sets of image data having a tendency different from that of sets of image data used in training of the machine learning model, due to a change in the environment, such as deterioration of illumination or adhesion of dust to the camera lens during practical use of the machine learning model.

For example, in another known reference technique, a machine learning model is adapted to data drift without use of true information in practical use of the machine learning model. In this reference technique, inference results high in precision are output, by tuning of the machine learning model by use of sets of input data for practical use and input of sets of input data to the machine learning model that has been tuned.

In a case where a machine learning model is tuned by use of sets of input data as described above, a certain adequate amount of data is desirably processed. However, in a case where processing is executed irregularly or in a case of small-scale practical use on-site, an amount of data needed for maintaining high inference precision is unable to be prepared promptly and inferences for sets of input data are unable to be made at certain processing intervals.

### Processing by Information Processing Apparatus 100

In view of the above described reference techniques, in a case where sets of input data do not satisfy a preset tuning condition, the information processing apparatus 100 according to the first embodiment thus executes processing of generating sets of image data that have been subjected to a kind of preprocessing so that the sets of image data generated satisfy the tuning condition.

Specifically, the information processing apparatus 100 according to the first embodiment acquires a machine learning model that outputs, on the basis of plural sets of image data resulting from imaging of objects, inference results for the plural sets of image data, the inference results having been in practical use already, and collects sets of image data resulting from imaging of objects by means of at least one or more cameras, the objects being related to a target that the inference results from the machine learning model are practically used for.

The information processing apparatus 100 then makes a determination on whether or not the sets of image data collected satisfy a tuning condition for the machine learning model acquired, and on the basis of a result of the determination on whether or not the tuning condition is satisfied, specifies a kind of preprocessing to be executed on the sets of image data collected, and thereafter generates sets of image data that have been subjected to the kind of processing specified.

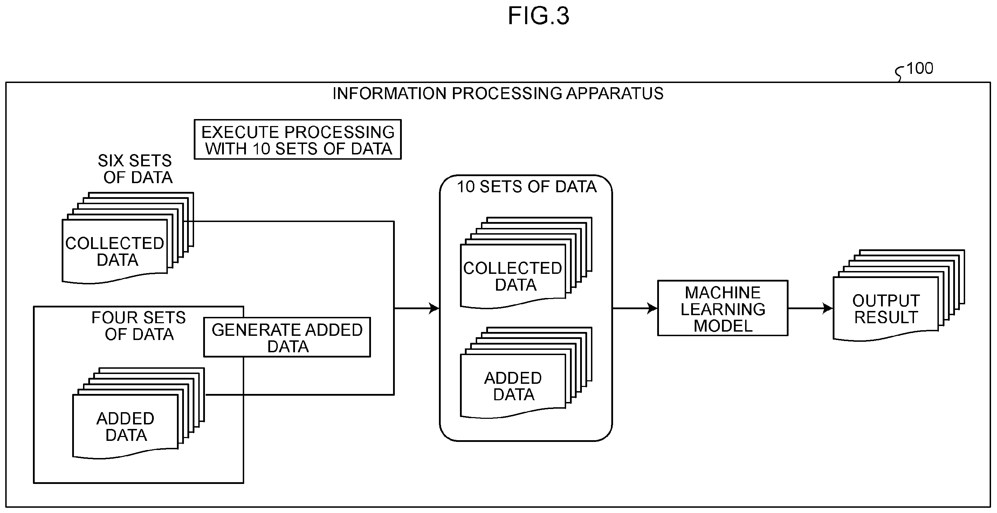

FIG. 3 is a diagram illustrating processing by an information processing apparatus according to the first embodiment. For example, the information processing apparatus 100 acquires a machine learning model that has been trained to output inference results in response to input of sets of image data first, as described above. The information processing apparatus 100 then collects 6 sets of image data on images resulting from imaging of objects to be subjected to inference.

For example, because collection of 10 sets of data has been set as the tuning condition beforehand, the information processing apparatus 100 determines that the collected sets of data do not satisfy the tuning condition. Because 4 sets of data are lacking, the information processing apparatus 100 specifies a kind of processing that is addition of sets of image data.

For example, by adding sets of image data that have been previously input or sets of image data that have been used in training, the information processing apparatus 100 then executes the preprocessing of adding sets of image data, and generates 10 sets of input data including the 4 sets of added data and the 6 sets of collected data.

As a result, even in a case where an amount of data available is less than a preset amount upon execution of tuning of the machine learning model and inference processing, the information processing apparatus 100 is able to adequately execute processing of sets of input data by generating sets image data applicable to the machine learning model in practical use.

### Functional Configuration of Information Processing Apparatus 100

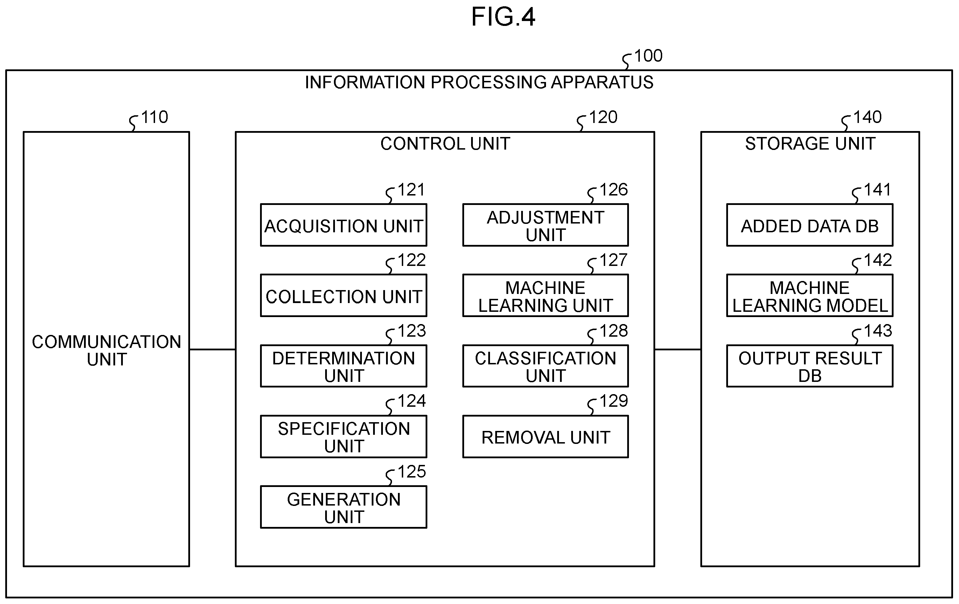

A functional configuration of the information processing apparatus 100 will be described next. FIG. 4 is a functional block diagram illustrating a functional configuration of the information processing apparatus according to the first embodiment. As illustrated in FIG. 4, the information processing apparatus 100 has a communication unit 110, a control unit 120, and a storage unit 140. The communication unit 110 controls communication between the information processing apparatus 100 and another apparatus For example, the communication unit 110 receives data for practical use, the data being those to be subjected to inference by a machine learning model, from an external apparatus, such as a server, a camera, or an administrator terminal.

The storage unit 140 stores, for example, various data and programs executed by the control unit 120. For example, the storage unit 140 stores an added data DB 141, a machine learning model 142, and an output result DB 143.

The added data DB 141 stores sets of image data added by a generation unit 125 described later. For example, the added data DB 141 stores sets of image data that have been previously input and sets of image data that have been used in training of the machine learning model 142.

The machine learning model 142 is a model generated by machine learning and is acquired by an acquisition unit 121 described later. For example, the machine learning model 142 is a model using a deep neural network (DNN). A neural network or another machine learning algorithm may be adopted for the machine learning model 142.

The output result DB 143 stores output results obtained by practical use of the machine learning model 142. Specifically, the output result DB 143 stores inference results of inferences made by the machine learning model 142. For example, the output result DB 143 stores classification results for sets of image data that have been classified as normal sets of image data and abnormal sets of image data by the machine learning model 142.

The control unit 120 is a processing unit that controls the whole information processing apparatus 100 and is implemented by, for example, a processor. This control unit 120 has the acquisition unit 121, a collection unit 122, a determination unit 123, a specification unit 124, the generation unit 125, an adjustment unit 126, a machine learning unit 127, a classification unit 128, and a removal unit 129.

The acquisition unit 121 acquires, i.e., detects the machine learning model 142 that outputs, on the basis of plural sets of image data resulting from imaging of objects, inference results for the plural sets of image data, the inference results having been in practical use already. For example, the acquisition unit 121 acquires the machine learning model 142 from an external data accumulation device, the machine learning model 142 being capable of classifying images of appearances of products into normal images and abnormal images by having been trained with explanatory variables corresponding to images of appearances of objects to be subjected to inference and an objective variable corresponding to true labels indicating whether the images of the appearances are normal or abnormal.

The following description is on a specific example of the machine learning model 142 acquired by the acquisition unit 121. For example, the acquisition unit 121 acquires the machine learning model 142, for which an amount of input data to be processed at once is to be prescribed and a parameter is to be set. Specifically, when a preset amount of input data to be processed at once for tuning and high precision inference processing using input data has been collected, the acquisition unit 121 acquires the machine learning model 142, which is to be subjected to the tuning and to implement inference processing using the input data.

Furthermore, for example, the acquisition unit 121 acquires the machine learning model 142 applicable to an application that detects abnormalities in objects. Specifically, the acquisition unit 121 acquires the machine learning model 142 applicable to an application that detects abnormalities in products to be inspected by determinations on whether or not the products each have any defect.

The collection unit 122 collects sets of image data resulting from imaging of objects by means of at least one or more cameras, the objects being related to a target that inference results from the machine learning model 142 acquired are practically used for. For example, the collection unit 122 collects sets of image data resulting from imaging of products by means of at least one or more cameras, the products being targets to be subjected to inference by the machine learning model 142 acquired, the sets of image data representing appearances of the products.

For example, in a case where the machine learning model 142 applicable to an application that detects abnormalities in objects has been acquired, the collection unit 122 collects sets of image data resulting from imaging of objects by means of at least one or more cameras, during practical use of the application.

The determination unit 123 makes a determination on whether or not the sets of image data collected satisfy the tuning condition of the machine learning model 142 acquired. For example, in a case where the machine learning model 142, for which an amount of input data to be processed at once has been prescribed beforehand, is acquired, the determination unit 123 compares an amount of image data captured by a camera with the amount of input data prescribed beforehand and determines that the tuning condition is not satisfied in a case where there is a difference between these amounts.

On the basis of a result of the determination on whether or not the tuning condition is satisfied, the specification unit 124 specifies a kind of preprocessing to be executed on the sets of image data collected. For example, in a case where it is determined that the tuning condition is not satisfied, the specification unit 124 specifies the kind of preprocessing as processing of adding sets of image data, processing of reducing the sets of image data, or processing of setting a weight for sets of image data.

The kind of preprocessing herein refers to content of preprocessing to be executed for the collected sets of image data to satisfy the tuning condition in the case where it is determined that the tuning condition is not satisfied, and in a case where the sets of image data collected are insufficient, for example, addition of sets of image data is specified as the kind of preprocessing.

Furthermore, on the basis of the result of the determination on whether or not the tuning condition is satisfied, the specification unit 124 may dynamically switch kinds of preprocessing. For example, in a case where it is determined, from content of the sets of image data collected, that the sets of image data is substantially insufficient after preprocessing of reducing the sets of image data is specified for the amount of the collected image data exceeding the amount prescribed beforehand, the specification unit 124 may switch the kind of preprocessing to addition of sets of image data.

For example, in a case where the number of sets of input data prescribed beforehand is "100", the specification unit 124 specifies reduction of the sets of image data as the kind of preprocessing first, on the bases of the number of the sets of image data collected, "120". In a case where many images with similar features are detected by classification of features of the sets of image data collected or many images small in size are detected, the specification unit 124 determines the substantial number of sets of image data collected to be "80" without counting, as sets of input data, the images with similar features or the images small in size.

Thereafter, because the substantial number of sets of image data collected, "80", is less than the number of sets of input data prescribed beforehand, "100", the specification unit 124 switches the kind of preprocessing, reduction of the sets of image data, to the kind of preprocessing, addition of sets of image data.

The generation unit 125 generates sets of image data that have been subjected to the specified kind of preprocessing. For example, the generation unit 125 generates sets of input data that have been adjusted to satisfy the amount prescribed beforehand as the tuning condition, by executing the kind of preprocessing specified by the specification unit 124.

Specifically, for example, in a case where the kind of preprocessing specified is addition of sets of data, the generation unit 125 extracts sets of image data that have been input previously or sets of image data that have been used in training of the machine learning model 142, from the added data DB 141 and generates sets of input data of the amount prescribed beforehand by adding the sets of image data corresponding to a shortage.

In a case where the kind of preprocessing specified is addition of sets of image data, the adjustment unit 126 adjusts a weight of update of any parameter, the update being according to the sets of image data to be added, according to a ratio of the number of the sets of image data added to the number of sets of image data collected. For example, in the case where the kind of preprocessing specified by the specification unit 124 is addition of sets of image data, the adjustment unit 126 adjusts a weight of these added sets of data so that the weight corresponds to a preset weight of processing on added data.

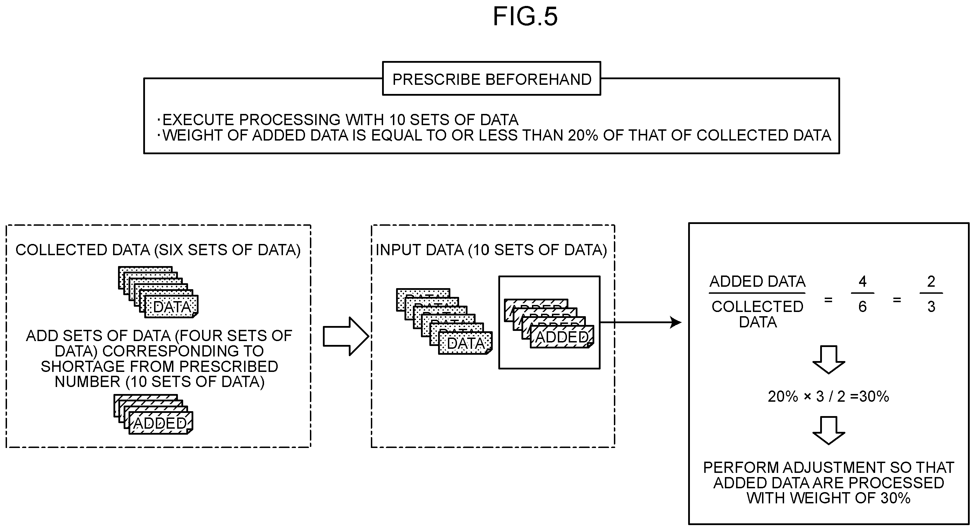

The following description is on a specific example of processing by the adjustment unit 126. FIG. 5 is a diagram illustrating a specific example of processing performed by an adjustment unit according to the first embodiment. In the example of FIG. 5, it has been prescribed beforehand that processing is to be performed with 10 sets of data for tuning of and inference processing by the machine learning model 142 and that a weight of processing of sets of data added by execution of a kind of preprocessing, addition of data, is 20%.

Under such circumstances, in a case where the number of sets of collected data is 6, the information processing apparatus 100 generates 10 sets of input data by adding 4 sets of data lacking for the prescribed number of sets of data, 10. Because the weight of the processing of added data has been prescribed to be 20%, the adjustment unit 126 calculates "20% × 3/2 = 30%" after calculating "added data/collected data = 4/6 = 2/3". The adjustment unit 126 makes an adjustment so that individual sets of added data are processed at the calculated weight, "30%". This method of calculating the weight is just an example and is not to be limited to the example, and for example, the weight of the added data may simply be half the weight of the collected data.

During practical use of the machine learning model 142, the machine learning unit 127 executes tuning of the machine learning model 142 by machine learning using input data. That is, after the machine learning model 142 has started being in practical use, the machine learning unit 127 performs retraining of the machine learning model 142 to update the machine learning model 142.

Specifically, on the basis of a loss function including entropy of first output from the machine learning model 142, the first output being in response to input of input data to the machine learning model 142, the machine learning unit 127 updates a parameter or parameters of one or more second layers corresponding to a second position in the machine learning model 142 while maintaining a parameter or parameters of one or more first layers corresponding to a first position in the machine learning model 142. The machine learning unit 127 thus generates a machine learning model 142 that has been updated, which is an example of a second machine learning model 142, the updated machine learning model 142 having the updated parameter or parameters for the layer or layers at the second position in the machine learning model 142.

Subsequently, on the basis of a loss function including entropy of second output from the updated machine learning model 142, the second output being in response to input of the same input data to the updated machine learning model 142, the machine learning unit 127 updates a parameter or parameters of one or more fourth layers corresponding to the first position in the updated machine learning model 142 while maintaining a parameter or parameters of one or more third layers corresponding to the second position in the updated machine learning model 142. The machine learning unit 127 thus generates an updated machine learning model 142, which is an example of a third machine learning model 142, the updated machine learning model 142 having the further updated parameter or parameters of the layer or layers at the first position in the updated machine learning model 142.

For example, the following description is on an example where the machine learning model 142 includes a batch normalization (BN) layer and a fully connected (FN) layer. In this case, the machine learning unit 127 updates the machine learning model 142 by updating a parameter or parameters of one or more BN layers corresponding to a second position in the machine learning model 142 by unsupervised training using data for practical use while maintaining a parameter or parameters of one or more FC layers corresponding to a first position in the machine learning model 142. Subsequently, by updating a parameter or parameters of one or more FC layers corresponding to the first position in the updated machine learning model 142 by unsupervised training using data for practical use while maintaining the updated parameter or parameters of the one or more BN layers corresponding to the second position in the updated machine learning model 142, the machine learning unit 127 further updates the machine learning model 142.

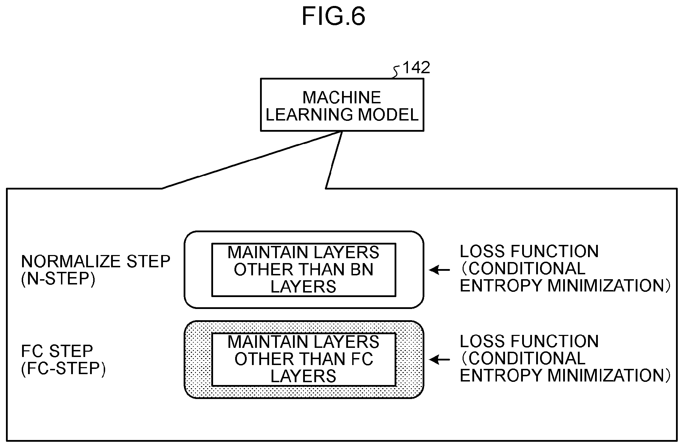

The following description is on details of machine learning upon practical use thereof. FIG. 6 is a diagram illustrating processing performed by a machine learning unit according to the first embodiment. As illustrated in FIG. 6, the machine learning model 142 includes BN layers and FC layers. The BN layers are layers for normalization of the average of inputs in batches to 0 and the standard deviation to 1 and are part of a feature extractor, and usually several BN layers are present between convolutional layers. The number of layers depends on the architecture of the model. The FC layers are fully connected layers, which use features and actually perform classification of the features after feature values have been extracted by the feature extractor, and these fully connected layers (usually one to three layers) are arranged as final layers and perform output corresponding to the number of classes predicted.

The machine learning unit 127 then executes, in turn, update processing (N-Step) of updating parameters of the BN layers while maintaining parameters of layers other than the BN layers so that the parameters of the layers other than the BN layers are not updated, and update processing (FC-Step) of updating parameters of the FC layers while maintaining parameters of layers other than the FC layers so that the parameters of the layers other than the FC layers are not updated. This N-Step is update processing of adjusting only the parameters upon affine transformation after normalization and the FC-Step is updating processing of directly adjusting weights of the FC layers.

As described above, the information processing apparatus 100 is capable of following data drift by executing inference processing and machine learning (retraining) in a state where the machine learning model 142 is in practical use.

The time, at which the machine learning unit 127 performs machine learning (retraining) is not particularly limited, and machine learning may be performed every time input data are input to the machine learning model 142 or may be performed when deterioration in precision of the machine learning model 142 has been detected, the deterioration being described later with respect to a second embodiment.

The classification unit 128 inputs the prescribed amount of image data to the machine learning model 142, and on the basis of output results from the machine learning model 142, classifies the image data according to whether or not appearances of objects each have any defect. For example, the classification unit 128 inputs a prescribed amount of data on images of appearances of products to the machine learning model 142, the data having been generated by the generation unit 125, and acquires classification results resulting from classification of the input data into abnormal image data having defects in the appearances of the products and normal image data having no defects in the appearances of the products.

The removal unit 129 generates classification results for the image data input, by removing any image data that have been added, from the classified image data. For example, in a case where input data including image data that have been added are input to the machine learning model 142, the removal unit 129 generates classification results for only image data collected by imaging of objects, by removing the added image data from classification results for the input data.

By using the classification results generated by the removal unit 129, the information processing apparatus 100 may determine whether or not the appearances of the target products each have any defect. For example, in a case where one image is captured for one target product, the information processing apparatus 100 may determine a product corresponding to a set of image data classified as an abnormal set of image data as an abnormal product with a defect in its appearance. Furthermore, in a case where plural images are captured for one target product, the information processing apparatus 100 may compare the number of sets of image data classified as normal sets of image data with the number of sets of image data classified as abnormal sets of image data, and in a case where the number of the abnormal sets of image data is larger, the information processing apparatus 100 may determine that target product as an abnormal product with a defect in its appearance.

### Specific Example

Processing by the information processing apparatus 100 according to the first embodiment will be described next.

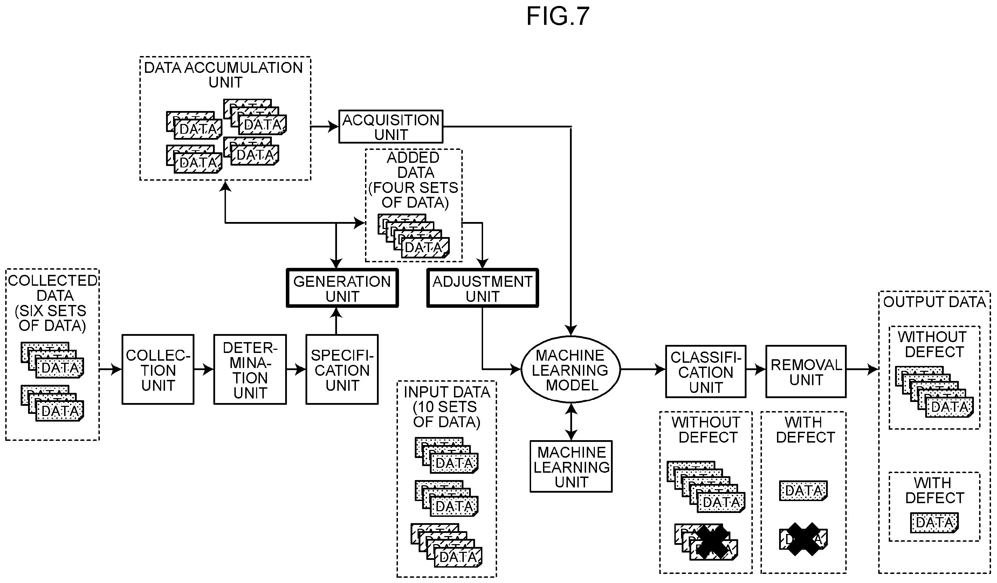

FIG. 7 is a diagram illustrating a specific example of overall processing performed by the information processing apparatus according to the first embodiment. FIG. 7 illustrates an example where the number of sets of input data prescribed beforehand is 10 and 10 sets of input data are input to the machine learning model 142 by elimination of a shortage in collected sets of data by addition of sets of image data.

Firstly, the acquisition unit 121 acquires the machine learning model 142 that executes processing of classifying each of sets of image data on appearances of products as a normal set of image data or an abnormal set of image data by input of the sets of image data. Furthermore, the collection unit 122 collects 6 sets of collected data that are sets of image data resulting from imaging of appearances of products by a camera.

Because the number of sets of collected data, 6, is less than 10, the number of sets of input data set beforehand as the tuning condition, the determination unit 123 makes a determination that the tuning condition is not satisfied. Subsequently, from a result of the determination that the tuning condition is not satisfied due to a shortage of data, the specification unit 124 specifies a kind of preprocessing, addition of sets of image data, and a kind of preprocessing, adjustment of a weight of the sets of image data added.

Subsequently, through the kind of preprocessing, the addition of sets of image data, the generation unit 125 acquires 4 sets of data corresponding to the shortage from a data accumulation unit, which is , for example, a database or an external server storing a machine learning model that has been trained, sets of image data that have been used in training, and sets of image data that have been input previously, and the generation unit 125 generates 10 sets of input data including the sets of data collected and the sets of data added. Furthermore, simultaneously therewith, the adjustment unit 126 makes an adjustment so that a weight of processing on the sets of data added becomes lighter than that of the sets of data collected, through the kind of preprocessing, the adjustment of a weight of processing on sets of image data added.

Subsequently, by using the 10 sets of input data generated, the machine learning unit 127 executes training (tuning) of the machine learning model 142. The classification unit 128 then acquires classification results of classification of sets of input data into sets of image data on products with defects and sets of image data on products without defects, by inputting the sets of input data to the machine learning model 142 that has been tuned. Subsequently, the removal unit 129 removes both the 3 sets of added data classified as those without defects and the one set of added data classified as that with a defect, and generates sets of output data that are classification results including only the sets of collected data.

As a result, even in a case where an amount of data available is less than a preset amount upon execution of tuning of the machine learning model 142 and classification processing, the information processing apparatus 100 is able to adequately execute tuning and classification of sets of image data by adding sets of image data applicable to the machine learning model in practical use.

Procedure of Processing by Information Processing Apparatus 100

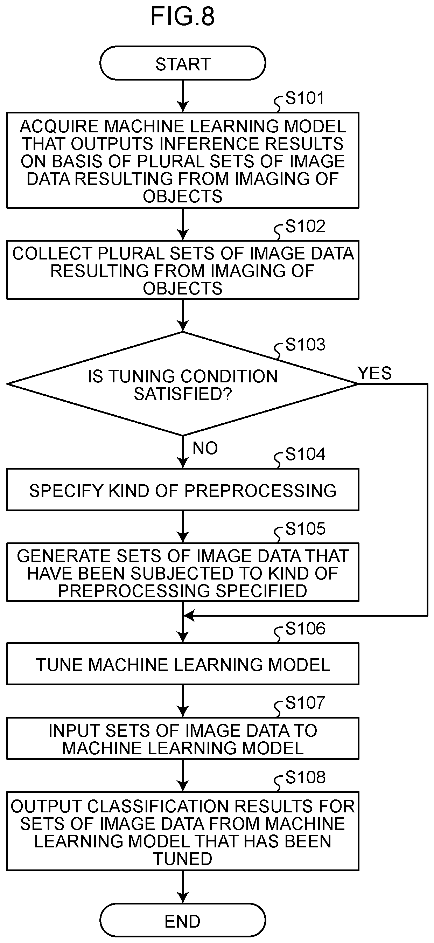

An example of a procedure of processing by the information processing apparatus 100 according to the first embodiment will be described next. FIG. 8 is a flowchart illustrating an example of a flow of processing according to the first embodiment. Steps in the flowchart illustrated in FIG. 8 may be executed in a different sequence and some processing may be added or some of the processing may be omitted.

Firstly, the information processing apparatus 100 acquires the machine learning model 142 that outputs inference results on the basis of plural sets of image data resulting from imaging of objects (S101). The information processing apparatus 100 then acquires plural sets of image data resulting from imaging of objects (S102). The information processing apparatus 100 then determines whether or not a tuning condition is satisfied (S103).

In a case where the tuning condition is not satisfied (S103; No), the information processing apparatus 100 specifies a kind of preprocessing (S104). The information processing apparatus 100 then generates sets of image data, on which the specified kind of preprocessing has been executed (S105). In a case where the tuning condition is satisfied (S103; Yes), or after the processing at S105, the information processing apparatus 100 tunes the machine learning model 142 by using the sets of image data (S106).

The information processing apparatus 100 then inputs the sets of image data to the machine learning model 142 (S107). The information processing apparatus 100 then outputs classification results for the sets of image data from the machine learning model 142 that has been tuned (S108), and ends the processing.

### Effects

As described above, the information processing apparatus 100 according to the first embodiment acquires the machine learning model 142, which outputs, on the basis of plural sets of image data resulting from imaging of objects, inference results for the plural sets of image data, the inference results having been in practical use already, and collects sets of image data resulting from imaging of objects by means of at least one or more cameras, the objects being related to a target that the inference results from the machine learning model 142 are practically used for.

The information processing apparatus 100 then makes a determination on whether or not the sets of image data collected satisfy a tuning condition for the machine learning model 142 acquired, specifies, on the basis of a result of the determination on whether or not the tuning condition is satisfied, a kind of preprocessing to be executed on the sets of image data collected, and thereafter generates sets of image data, on which the specified kind of preprocessing has been executed.

As a result, even in a case where the amount of the sets of image data collected is less than a preset amount upon execution of tuning of the machine learning model 142 and inference processing, the information processing apparatus 100 is able to adequately execute processing on sets of input data by generating sets of image data applicable to the machine learning model 142 in practical use.

Furthermore, in a case where the kind of preprocessing specified is addition of sets of image data, the information processing apparatus 100 adjusts a weight of update of any parameter, the update being according to the sets of image data to be added, according to a ratio of the number of sets of image data to be added to the number of sets of image data collected. As a result, the information processing apparatus 100 enables: prevention of a situation where features of the sets of added data become dominant when there are many sets of added data in relation to the sets of collected data; and thus, adequate adaptation to a change (data drift) in the tendency of the sets of collected data.

Furthermore, the information processing apparatus 100 inputs a prescribed amount of sets of image data to the machine learning model 142, classifies, on the basis of output results from the machine learning model 142, the sets of image data according to whether or not appearances of objects therein each have any defect, thereafter removes sets of added image data from the sets of image data classified, and generates classification results for the sets of image data input. As a result, the information processing apparatus 100 is capable of removing the sets of added data from the classification results according to whether or not products in the sets of image data input each have any defect and outputting the classification results for only the sets of image data collected.

Furthermore, during practical use of the machine learning model 142, the information processing apparatus 100 executes tuning of the machine learning model 142 by machine learning using sets of input data. As a result, the information processing apparatus 100 enables: tuning of the machine learning model 142 according to any data drift during the practical use; and execution of inference processing high in precision.

### (b) Second Embodiment

An example where data drift is addressed by tuning performed every time generated sets of input data are input to the machine learning model 142 has been described above with respect to the first embodiment, but the present invention is not to be limited to this example. For example, the information processing apparatus 100 may execute tuning processing or switch the machine learning model 142 to another machine learning model 142 adapted to a tendency of data drift, according to a determination result on deterioration in precision of the machine learning model 142.

An information processing apparatus 100A that executes processing of making a determination of a state of deterioration in precision of a machine learning model 142 in practical use and improving deterioration in precision of inference processing according to a result of this determination will now be described with respect to a second embodiment. Description of components and processing that are similar to those of the first embodiment will be omitted.

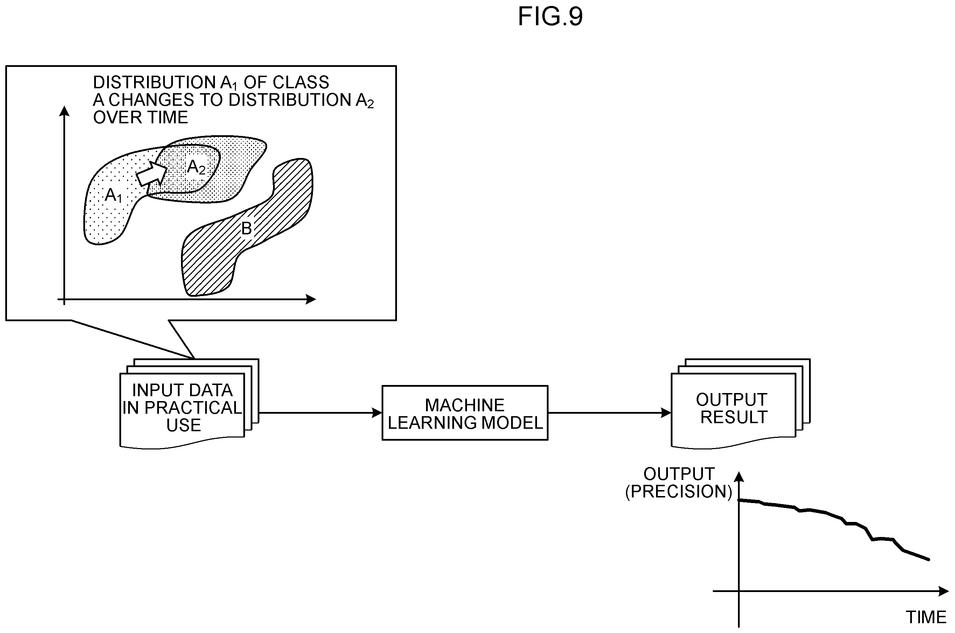

As described above, data drift over time is one of causes of deterioration in precision of the machine learning model 142. FIG. 9 is a diagram illustrating deterioration in precision of a machine learning model due to data drift. As illustrated in FIG. 9, as time elapses, a distribution A₁ of a class A of input data changes to a distribution A₂ during practical use. In this case, because the machine learning model 142 has executed machine learning based on the distribution A₁, even if data having the distribution A₂ are input to the machine learning model 142, the machine learning model 142 is unable to accurately identify the data as those of the class A.

As a result, inference precision of the machine learning model 142 will deteriorate as time elapses and the machine learning model 142 is unable to perform classification processing on image data while maintaining precision that is high at the start of the practical use.

Therefore, the information processing apparatus 100A according to the second embodiment determines, on the basis of a tendency of classes where inference results for sets of image data generated are classified into, a state of deterioration in precision of the inference results output by the machine learning model 142 acquired, and executes tuning or switchover of the machine learning model 142 to another machine learning model 142 in a case where the precision is determined as having deteriorated.

For example, by calculating an agreement rate with output of an inspector model that solves a problem similar to that of the machine learning model 142, for which deterioration in precision is to be determined, or by comparing inference results from the machine learning model 142 with estimated labels newly estimated by clustering of sets of input data, the information processing apparatus 100A determines a state of the deterioration in the precision of the machine learning model 142.

In a case where the precision of the machine learning model 142 has been determined as having deteriorated due to data drift over time from morning to night, for example, the information processing apparatus 100A switches the machine learning model 142 to be used in inference processing from the machine learning model 142 that has been tuned for daytime to a machine learning model 142 that has been tuned for nighttime.

The information processing apparatus 100A is thereby able to switch the machine learning model 142 in practical use to the machine learning model 142 adapted to the tendency of the data drift in the case where precision of the machine learning model 142 in practical use is determined as having deteriorated, and is thus able to improve the deterioration in the precision of the machine learning model 142.

Functional Configuration of Information Processing Apparatus 100A

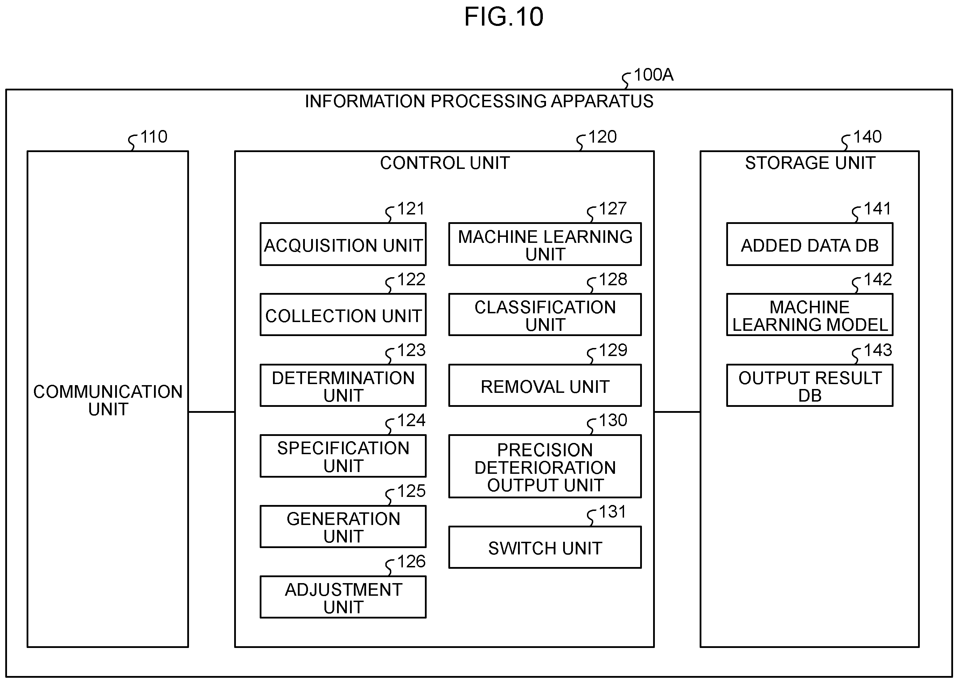

FIG. 10 is a functional block diagram illustrating a functional configuration of an information processing apparatus according to the second embodiment. The information processing apparatus 100A illustrated in FIG. 10 is different from the information processing apparatus 100 according to the first embodiment in that the information processing apparatus 100A has a precision deterioration output unit 130 and a switch unit 131. Functional components that implement processing different from the processing according to the first embodiment will hereinafter be described in sequence.

The precision deterioration output unit 130 determines, on the basis of a tendency of classes where inference results for sets of image data generated are classified into, a state of deterioration in precision of the inference results output by the machine learning model 142 acquired, and outputs the determined state of deterioration in precision of the inference results.

For example, by executing processing of calculating an agreement rate with output of an inspector model that solves a problem similar to that of the machine learning model 142, for which the deterioration in precision is to be determined, or by executing processing of comparing the inference results from the machine learning model 142 with estimated labels newly estimated by clustering of sets of input data, the precision deterioration output unit 130 makes a determination of a state of deterioration in precision of inference by the machine learning model 142 and outputs a result of the determination.

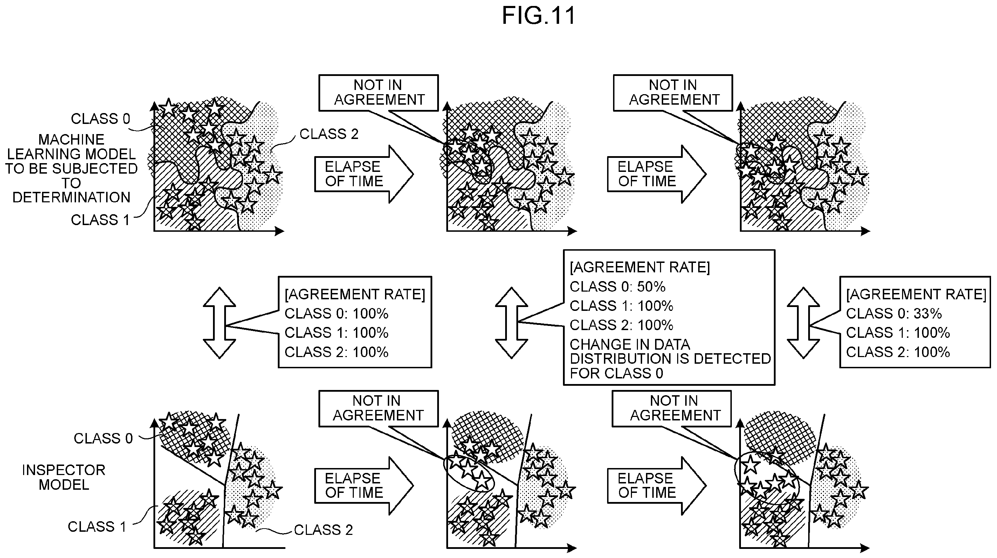

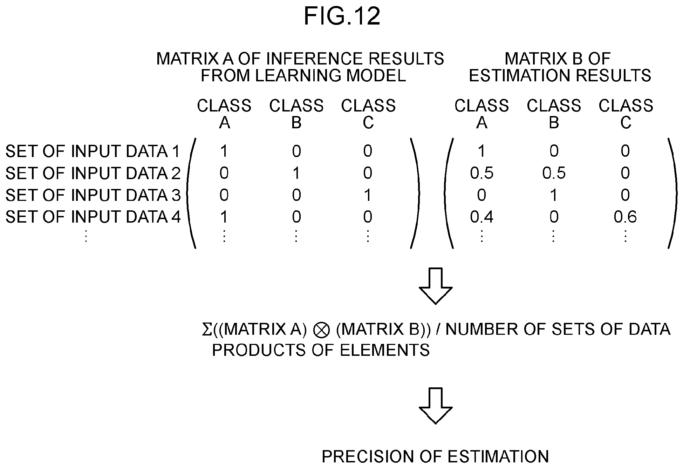

The following description is on specific examples of a method of determining deterioration in precision of the machine learning model 142 by means of the precision deterioration output unit 130. FIG. 11 and FIG. 12 are diagrams each illustrating an example of a method of determining a state of deterioration in precision of a machine learning model according to the second embodiment.

### First Method of Determining Deterioration in Precision

A method of making a determination on deterioration in precision of the machine learning model 142 by processing of calculating an agreement rate with output of an inspector model that solves a problem similar to that of the machine learning model 142, for which the deterioration in precision is to be determined, will be described first. The following description is on an example where the machine learning model 142 to be subjected to the determination and the inspector model execute processing of classifying each of sets of input data into any one of classes from a class 0 to a class 3.

The inspector model herein is an example of a detection model generated under conditions different from those for the machine learning model 142 (in different model applicability domains). That is, the inspector model is generated so that domains (feature values) for determination as the class 0, class 1, and class 2 by the inspector model are respectively narrower in range than domains for determination as the class 0, class 1, and class 2 by the machine learning model 142.

This is because the narrower the model applicability domains, the more sensitively the output is changed by a small change in the input data. Therefore, making the model applicability domains of the inspector model narrower than those of the machine learning model 142 to be subjected to the determination enables the output values of the inspector model to be changed by a small change in the input data and enables measurement of a change in the tendency of the data by an agreement rate between output values from the inspector model and output values from the machine learning model 142.

FIG. 11 illustrates output results from the machine learning model 142 to be subjected to the determination and output results from the inspector model, in response to input data. With respect to FIG. 11, with one inspector model serving as an example, the probability of the output of the inspector model agreeing with the output of the machine learning model 142 to be monitored will be described by use of data distributions to model applicability domains in feature space.

As illustrated in FIG. 11, the precision deterioration output unit 130 acquires output indicating that 6 sets of input data belong to the model applicability domain of the class 0, 6 sets of input data belong to the model applicability domain of the class 1, and 8 sets of input data belong to the model applicability domain of the class 2, from the machine learning model 142 to be subjected to the determination, at the start of practical use. The precision deterioration output unit 130 also acquires output indicating that 6 sets of input data belong to the model applicability domain of the class 0, 6 sets of input data belong to the model applicability domain of the class 1, and 8 sets of input data belong to the model applicability domain of the class 2, from the inspector model.

That is, because agreement rates between the machine learning model 142 and the inspector model for the classes are all 100%, the precision deterioration output unit 130 calculates the agreement rate as 100%. At the start of practical use, their classification results agree with each other.

As time elapses, the precision deterioration output unit 130 acquires output indicating that 6 sets of input data belong to the model applicability domain of the class 0, 6 sets of input data belong to the model applicability domain of the class 1, and 8 sets of input data belong to the model applicability domain of the class 2, from the machine learning model 142 to be subjected to the determination. However, the precision deterioration output unit 130 acquires output indicating that 3 sets of input data belong to the model applicability domain of the class 0, 6 sets of input data belong to the model applicability domain of the class 1, and 8 sets of input data belong to the model applicability domain of the class 2, from the inspector model.

The precision deterioration output unit 130 thus calculates the agreement rate as 50% ((3/6) × 100) for the class 0, and the agreement rates as 100% for the class 1 and class 2. That is, a change in the data distribution for the class 0 is detected. At this time, the inspector model is in a state of not necessarily classifying the 3 sets of input data, which have not been classified into the class 0, into the class 0.

As time elapses further, the precision deterioration output unit 130 acquires output indicating that 3 sets of input data belong to the model applicability domain of the class 0, 6 sets of input data belong to the model applicability domain of the class 1, and 8 sets of input data belong to the model applicability domain of the class 2, from the machine learning model 142 to be subjected to the determination. However, the precision deterioration output unit 130 acquires output indicating that 1 set of input data belongs to the model applicability domain of the class 0, 6 sets of input data belong to the model applicability domain of the class 1, and 8 sets of input data belong to the model applicability domain of the class 2, from the inspector model.

The precision deterioration output unit 130 thus calculates the agreement rate as 33% ((1/3) × 100) for the class 0 and the agreement rates as 100% for the class 1 and class 2. That is, the data distribution for the class 0 is determined as having changed. At this time, the machine learning model 142 is in a state of not classifying sets of input data supposed to be classified into the class 0 into the class 0 and the inspector model is in a state of not necessarily classifying the 5 sets of input data, which have not been classified into the class 0, into the class 0.

As illustrated in FIG. 11, the precision deterioration output unit 130 detects a decrease in the agreement rate between the output results from the machine learning model 142 and the output results from the inspector model, the decrease being due to data drift of the sets of input data over time. The precision deterioration output unit 130 then determines that the precision of the machine learning model 142 has deteriorated in a case where the agreement rate is less than a preset threshold.

Second Method of Determining Deterioration in Precision

A method of making a determination on deterioration in precision of the machine learning model 142 by executing processing of comparing inference results from the machine learning model 142 with estimated labels newly estimated by clustering of sets of input data will be described next. The following description is on an example where the machine learning model 142 to be subjected to the determination executes processing of classifying sets of input data each with any one label of classes from a class A to a class C.

The precision deterioration output unit 130 performs clustering of feature space used in determination of sets of input data to be subjected to inference after the start of practical use, for example, and associates the sets of input data with estimated labels by estimating true information that is results of association between clusters with labels.

FIG. 12 illustrates inference results from the machine learning model 142 and estimation results from the precision deterioration output unit 130, for sets of input data. For example, an inference result for a set of input data 1 is "(1, 0, 0)" because the set of input data 1 has been inferred to be in the class A by the machine learning model 142, and an estimation result for the set of input data 1 is "(1, 0, 0)" because the precision deterioration output unit 130 has estimated the set of input data 1 to belong to a class A. Similarly, an inference result for a set of input data 2 is "(0, 1, 0)" because the set of input data 2 has been inferred to be in the class B by the machine learning model 142, and an estimation result for the set of input data 2 is "(0.5, 0.5, 0)" because the precision deterioration output unit 130 has estimated the set of input data 2 to possibly belong to both the class A and class B.

The precision deterioration output unit 130 then generates a matrix of inference results from the machine learning model 142 for sets of input data and a matrix of estimation results for the sets of input data, calculates the sum of products of their elements, divides the sum of the products of the elements by the number of sets of data, and thereby calculates precision (score) of inference. In a case where the precision of inference is less than a threshold, the precision deterioration output unit 130 detects that precision of the machine learning model 142 is in a deteriorated state.

### Switching Machine Learning Models

In a case where it is determined that the machine learning model 142 used in a first time period has deteriorated, the switch unit 131 switches the machine learning model 142 used in the first time period to a machine learning model 142 to be used in a second time period. For example, in a case where it is determined that precision of inference by a machine learning model 142 for daytime has deteriorated over time, the switch unit 131 switches the machine learning model 142 in a state of being in practical use from the machine learning model 142 for daytime to a machine learning model 142 for nighttime.

The machine learning model 142 for daytime is, for example, a machine learning model 142 that is capable of precisely making inferences on sets image data collected in the daytime by implementation of training or tuning with sets of image data collected in the daytime. The machine learning model 142 for nighttime is, for example, a machine learning model 142 that is capable of precisely making inferences on sets of image data collected in the nighttime by implementation of training or tuning with sets of image data collected in the nighttime.

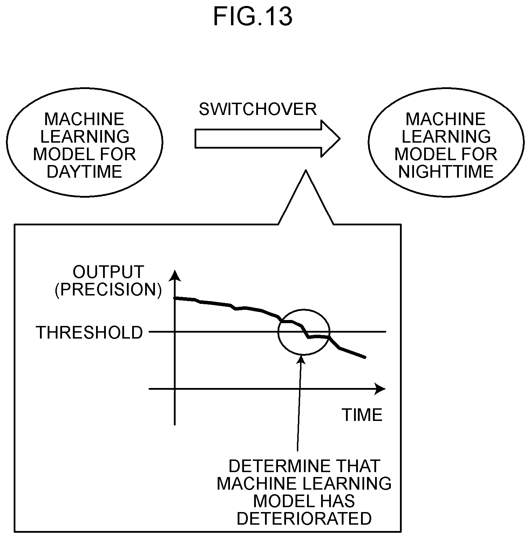

The following description is on an example of processing by the switch unit 131. FIG. 13 is a diagram illustrating processing performed by a switch unit according to the second embodiment. FIG. 13 illustrates an example where the machine learning model 142 for daytime is switched to the machine learning model 142 for nighttime as time elapses, in a situation where the machine learning model 142 for daytime is in practical use.

As illustrated in FIG. 13, the information processing apparatus 100A acquires the machine learning model 142 for daytime in the daytime and classifies sets of image data resulting from imaging of appearances of products, into normal sets of image data and abnormal sets of image data. For example, the information processing apparatus 100A monitors classification results from the machine learning model 142 and determines a state of deterioration in precision of the machine learning model 142.

In this situation, the information processing apparatus 100A makes a determination that a tendency of sets of image data collected has changed over time from the daytime to the nighttime and precision of the machine learning model 142 for daytime has become less than a preset threshold. As a result of this determination of deterioration in the precision of the machine learning model 142 for daytime, the information processing apparatus 100A switches the machine learning model 142 in practical use to the machine learning model 142 for nighttime. Thereafter, the information processing apparatus 100A similarly performs classification processing and determination processing for a state of deterioration in precision, during practical use of the machine learning model 142 for nighttime.

As a result, the information processing apparatus 100A is capable of performing classification of sets of image data collected while maintaining high precision, without being affected by data drift due to elapse of time from the daytime to the nighttime.

Procedure of Determination Processing for Deterioration in Precision by Information Processing Apparatus 100A

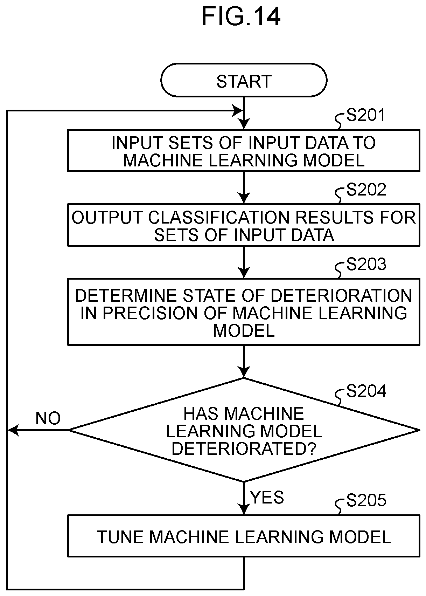

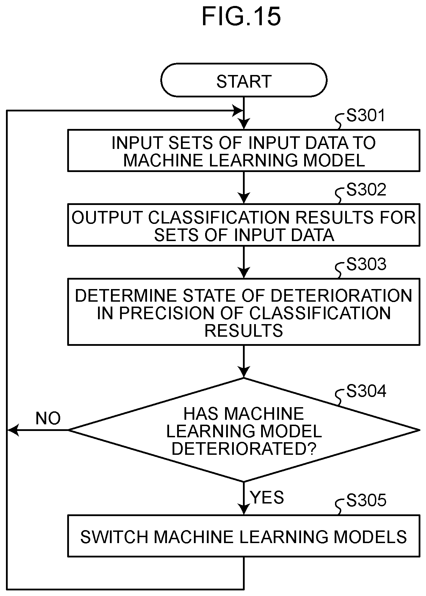

The following description is on examples of a procedure of processing by the information processing apparatus 100A according to the second embodiment. FIG. 14 and FIG. 15 are each a flowchart illustrating an example of a flow of overall processing according to the second embodiment. Steps in the flowcharts illustrated in FIG. 14 and FIG. 15 may be executed in a different sequence, some processing may be added, or some of the processing may be omitted.

The processing illustrated in FIG. 14 will be described first. The information processing apparatus 100A inputs sets of input data that have been generated, to the machine learning model 142 (S201). The information processing apparatus 100A then outputs classification results for the sets of input data (S202). Subsequently, by using the classification results, the information processing apparatus 100A determines a state of deterioration in precision of the machine learning model 142 (S203).

In a case where it is determined that the precision of the machine learning model 142 has deteriorated (S204; Yes), the information processing apparatus 100A performs tuning of the machine learning model 142 (S205). In a case where it is determined that the precision of the machine learning model 142 has not deteriorated (S204; No) or after processing at S205, the information processing apparatus 100A returns to S201 and continues processing.

### Procedure of Model Switch Processing by Information Processing Apparatus 100A

The processing illustrated in FIG. 15 will be described next. The information processing apparatus 100A inputs sets of input data that have been generated, to the machine learning model 142 (S301). The information processing apparatus 100A then outputs classification results for the sets of input data (S302). Subsequently, by using the classification results, the information processing apparatus 100A determines a state of deterioration in precision of the machine learning model 142 (S303).

In a case where it is determined that the precision of the machine learning model 142 has deteriorated (S304; Yes), the information processing apparatus 100A switches the machine learning model 142 to another machine learning model 142 (S305). In a case where it is determined that the precision of the machine learning model 142 has not deteriorated (S304; No) or after processing at S305, the information processing apparatus 100A returns to S301 and continues processing.

### Effects

As described above, the information processing apparatus 100A determines, on the basis of a tendency of classes where inferences results for sets of image data generated are classified into, a state of deterioration in precision of the inference results output by the machine learning model 142 acquired, and outputs the determined state of deterioration in precision of the inference results. As a result, the information processing apparatus 100A is able to visualize the deterioration in the precision of the inference by the machine learning model 142, the deterioration being due to data drift, and to implement processing that improves the deterioration in the precision.

Furthermore, in a case where it is determined that the machine learning model 142 used in the first time period has deteriorated, the information processing apparatus 100A switches the machine learning model 142 used in the first time period to the machine learning model 142 to be used in the second time period. As a result, in a case where precision of inference by the machine learning model 142 has deteriorated due to data drift over time, the information processing apparatus 100A is able to prevent deterioration in precision of inference by switching the machine learning model 142 to a machine learning model 142 adapted to a tendency of the data drift.

### (c) Third Embodiment

Embodiments of the present invention have been described above, but the present invention may be implemented in various different modes, other than the above described embodiments.

### Numerical Values

The numbers of rows and columns of the matrices and values of their elements used in the embodiments described above are just examples and may be optionally modified. Furthermore, the flows of the processing described by reference to the flowcharts may be modified as appropriate so long as no contradictions are caused by the modification.

### Training Methods

For example, the training illustrated in FIG. 6 has been described as a method of training the machine learning model 142 in the first embodiment, but without being limited to this method, for example, general supervised training may be used.

### System

The processing procedures, control procedures, specific names, and information including various data and parameters, which have been described above and illustrated in the drawings may be optionally modified unless particularly stated otherwise.

Furthermore, the components of each apparatus in the drawings have been illustrated functionally and/or conceptually, and do not need to be physically configured as illustrated in the drawings. That is, specific modes of separation and integration of each apparatus are not limited to those illustrated in the drawings. That is, all or part of each apparatus may be configured to be functionally or physically separated or integrated in any units according to various loads and use situations, for example.

Furthermore, all or any part of the processing functions performed in the apparatuses may be implemented by a CPU and a program analyzed and executed by the CPU, or may be implemented as hardware by wired logic.

### Hardware

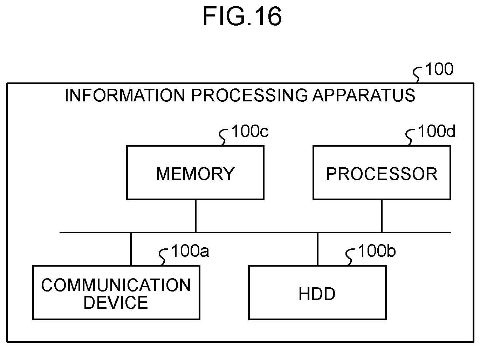

FIG. 16 is a diagram illustrating an example of a hardware configuration. The information processing apparatus 100 and the information processing apparatus 100A have similar configurations and the following description will thus be on the information processing apparatus 100. As illustrated in FIG. 16, the information processing apparatus 100 has a communication device 100a, a hard disk drive (HDD) 100b, a memory 100c, and a processor 100d. These units illustrated in FIG. 16 are connected to one another via a bus, for example.

The communication device 100a is a network interface card, for example, and performs communication with another device. The HDD 100b stores a DB and a program that causes the functions illustrated in FIG. 4 or FIG. 10 to operate.

For example, the processor 100d causes a process to be operated, the process executing the functions described by reference to FIG. 4, for example, by reading, from the HDD 100b, the program that executes the same processing as the processing units illustrated in FIG. 4, and loading the program into the memory 100c. For example, this process executes the same functions as the processing units included in the information processing apparatus 100. Specifically, the processor 100d reads the program from the HDD 100b, for example, the program having the same functions as the acquisition unit 121, the collection unit 122, the determination unit 123, the specification unit 124, the generation unit 125, the adjustment unit 126, the machine learning unit 127, the classification unit 128, and the removal unit 129. The processor 100d then executes the process that executes the same processing as the acquisition unit 121, the collection unit 122, the determination unit 123, the specification unit 124, the generation unit 125, the adjustment unit 126, the machine learning unit 127, the classification unit 128, and the removal unit 129.

As described above, the information processing apparatus 100 operates as an information processing apparatus that executes an information processing method, by reading and executing the program. Furthermore, the information processing apparatus 100 may implement the same functions as those according to any of the above described embodiments by reading the program from a recording medium by means of a medium reading device, and executing the program read. The program referred to herein is not limited to being executed by the information processing apparatus 100. For example, the embodiment may be similarly applied to a case where another computer or a server executes the program, or a case where another computer and a server execute the program in corporation with each other.

The program may be distributed via a network, such as the Internet. Furthermore, this program may be executed by being recorded in a computer-readable recording medium, such as a hard disk, a flexible disk (FD), a CD-ROM, a magneto-optical (MO) disk, or a digital versatile disc (DVD), and being read from the recording medium by a computer.

An embodiment enables image data to be generated, the image data being applicable to a machine learning model in practical use.

## Claims

1. An information processing program that causes a computer (100) to execute a process comprising:
detecting (121, S101) a machine learning model that outputs, based on plural sets of image data resulting from imaging of objects, inference results for the plural sets of image data, the inference results having been in practical use already;
collecting (S102) sets image data resulting from imaging of objects by means of at least one or more cameras, the objects being related to a target that inference results from the machine learning model detected are to be practically used for;
determining (S103) whether or not the sets of image data collected satisfy a tuning condition for the machine learning model detected;
specifying (S104), based on a result of a determination on whether or not the tuning condition is satisfied, a kind of preprocessing to be executed on the sets of image data collected; and
generating (S105) sets of image data that have been subjected to the kind of preprocessing specified.

2. The information processing program according to claim 1, wherein
the detecting (S101) includes acquiring, the machine learning model that an amount of sets of input data to be processed at once is prescribed for and a parameter is set for,
the determining (S103) includes determining that the tuning condition is determined to be not satisfied in a case where an amount of sets of image data captured by the at least one or more cameras is less than the amount prescribed,
the specifying (S104) includes specifying preprocessing of adding sets of image data to the sets of image data collected in a case where the tuning condition is determined to be not satisfied, and
the generating (S105) includes generating the prescribed amount of sets of image data by addition of sets of image data.

3. The information processing program according to claim 2, wherein the process further includes tuning (S106) the machine learning model by adjusting a weight of update of the parameter, the update being according to the sets of image data added, according to a ratio of the number of the sets of image data added to the number of the sets of image data collected in a case where addition of the sets of image data is specified as the kind of preprocessing.

4. The information processing program according to claim 1, wherein the process further includes inputting (S107, S108) the prescribed amount of sets of image data to the machine learning model, and classifying, based on output results from the machine learning model, the sets of image data according to whether or not appearances of the objects each have any defect.

5. The information processing program according to claim 4, wherein the process further includes generating (S108) classification results for the sets of image data input, by removing the sets of image data added, from the sets of image data classified.

6. The information processing program according to claim 1, wherein
the process further includes:
generating (S106) a second machine learning model by updating a parameter or parameters of one or plural second layers corresponding to a second position in a first machine learning model while maintaining a parameter or parameters of one or plural first layers corresponding to a first position in the first machine learning model, based on a loss function including entropy of first output from the first machine learning model, the first output being in response to input of the prescribed amount of the sets of image data to the first machine learning model, the prescribed amount of the sets of image data not including true labels; and
generating a third machine learning model by updating a parameter or parameters of one or plural fourth layers corresponding to the first position in the second machine learning model while maintaining a parameter or parameters of one or plural third layers corresponding to the second position in the second machine learning model, based on a loss function including entropy of second output from the second machine learning model, the second output being in response to input of the prescribed amount of the sets of image data to the second machine learning model.

7. The information processing program according to claim 1, wherein
the detecting (S101) includes acquiring the machine learning model applicable to an application that detects abnormalities in objects, and
the collecting (S102) includes collecting sets of image data resulting from imaging of the objects by means of at least one or more cameras during practical use of the application.

8. The information processing program according to claim 1, wherein the process further includes, in the specifying (S104), dynamically switching the kind of preprocessing to another kind of preprocessing, based on the result of the determination on whether or not the tuning condition is satisfied.

9. The information processing program according to claim 1, wherein
the process further includes:
determining (S203), based on a tendency of classes that the inference results for the sets of image data generated are classified into, a state of deterioration in precision of the inference results output by the machine learning model detected; and
outputting the determined state of the deterioration in the precision of the inference results.

10. The information processing program according to claim 9, wherein
the determining (S303) the state of the deterioration in the precision includes determining a state of deterioration of the machine learning model used in a first time period, the deterioration being due to a change in an imaging condition of the objects over time,
wherein the process further includes:
switching (S305) the machine learning model used in the first time period to a machine learning model to be used in a second time period, in a case where the machine learning model used in the first time period is determined to have deteriorated; and
inputting the prescribed amount of the sets of image data to the machine learning model to be used in the second time period and detecting, based on output results from the machine learning model used in the second time period, whether or not appearances of the objects each have any defect.

11. An information processing apparatus (100) comprising:
an acquisition unit (121) configured to detect a machine learning model that outputs, based on plural sets of image data resulting from imaging of objects, inference results for the plural sets of image data, the inference results having been in practical use already;
a collection unit (S122) configured to collect sets of image data resulting from imaging of objects by means of at least one or more cameras, the objects being related to a target that inference results from the machine learning model detected are to be practically used for;
a determination unit (123) configured to determine on whether or not the sets of image data collected satisfy a tuning condition for the machine learning model detected;
a specification unit (124) configured to specify, based on a result of a determination on whether or not the tuning condition is satisfied, a kind of preprocessing to be executed on the sets of image data collected; and
a generation unit (125) configured to generate sets of image data that have been subjected to the kind of preprocessing specified.

12. An information processing method carried out by a computer (100), comprising:
detecting a machine learning model that outputs, based on plural sets of image data resulting from imaging of objects, inference results for the plural sets of image data, the inference results having been in practical use already;
collecting sets of image data resulting from imaging of objects by means of at least one or more cameras, the objects being related to a target that inference results from the machine learning model detected are to be practically used for;
determining whether or not the sets of image data collected satisfy a tuning condition for the machine learning model detected;
specifying, based on a result of a determination on whether or not the tuning condition is satisfied, a kind of preprocessing to be executed on the sets of image data collected; and
generating sets of image data that have been subjected to the kind of preprocessing specified.
